# EUROPÄISCHE PATENTANMELDUNG

(11) **EP 3 450 916 A1**
(43) Veröffentlichungstag der Anmeldung: **06.03.2019**
(21) Anmeldenummer: 18192613.0
(22) Anmeldetag: 04.09.2018
(51) Int. Cl.: G01C 15/00, G01C 21/36, G01S 17/88

(54) **MOBILTELEFON UMFASSEND EINEN 3D-SCANNER**

(30) Priorität: 05.09.2017 DE 102017120435; 05.12.2017 LU 100525
(71) Anmelder: Kohlhof, Stephan, 40547 Düsseldorf (DE)
(72) Erfinder: Kohlhof, Stephan, 40547 Düsseldorf (DE)

(57) **Zusammenfassung**

Mobiltelefon (1), umfassend
einen 3D-Scanner (10), der eingerichtet ist, die dreidimensionale uncodierte Gestalt (25) der Umgebung des Mobiltelefons zumindest teilweise zu erfassen.

## Beschreibung

Die Erfindung betrifft ein Mobiltelefon.

Heutige Mobiltelefone umfassen eine Reihe von Sensoren, die dem Mobiltelefon eine Vielzahl an Funktionen ermöglichen, die über das eigentliche Telefonieren hinaus gehen. Hierzu zählen insbesondere Sensoren zur Positionsbestimmung, z.B. GPS-Sensoren. Diese Sensoren sind i.d.R in der Lage, diskrete oder definierte, insbesondere künstlich erzeugte, Signale zu empfangen und auszuwerten. Ein GPS-Sensor verwendet dabei elektronische Signale, welche von Satelliten erzeugt werden; bei anderen Positionsbestimmungen werden die Funksignale von Mobilfunksendeanlagen und oder WLAN-Stationen empfangen und ausgewertet. Dies ermöglicht eine vergleichsweise genaue Positionsbestimmung auf Basis dieser elektromagnetischen Signale.

Ein Schwachpunkt der bisherigen Positionsbestimmungsverfahren von Mobiltelefonen liegt hingegen in der Ungenauigkeit bezüglich der Position innerhalb von Gebäuden. Zwar lässt sich über ein GPS- oder Mobilfunksignal erkennen, dass sich ein Mobiltelefon innerhalb eines bestimmten Gebäudes befindet; eine genauere Positionsbestimmung innerhalb des Gebäudes (welches Zimmer in welchem Stockwerk) ist allerdings zufriedenstellend möglich. Die immer größer werdenden Städte werden in die Höhe wachsen; einzelne Megahochhäuser werden die Aufgaben von Stadtteilen übernehmen, jeweils mit Einkaufsgegenden, Wohngegenden und Businessdistrikten. Satellitennavigationssysteme werden hierbei keine ausreichende Positionsbestimmung zur Navigation innerhalb eines solches Hochhauses bieten können.

Bei einer weiteren Möglichkeit zur Positionsbestimmung werden an bestimmten Positionen **codierte**, insbesondere eindeutige Markierungen angebracht (insbesondere Barcodes, QR-Codes, ggf. auch dreidimensionale Varianten hiervon), die von einem Scanner erfasst werden. Den jeweiligen Markierungen ist in einer Datenbank jeweils eine Positionsangabe zugeordnet, die vom Scanner abgerufen werden kann. Die abgerufene Positionsangabe wird dann als Position des Scanners festgelegt. Die Kamera kann in Verbindung mit einer entsprechenden Software als ein solcher Scanner wirken.

Es ist Aufgabe der vorliegenden Erfindung, ein Mobiltelefon mit einer verbesserten Funktionalität bereitzustellen. Dies wird gelöst durch ein Mobiltelefon sowie durch die Verfahren nach den Hauptansprüchen; bevorzugte Ausgestaltungen sind Gegenstand der Unteransprüche sowie der Beschreibung.

Das erfindungsgemäße Mobiltelefon umfasst einen 3D-Scanner, der eingerichtet ist, die dreidimensionale uncodierte Gestalt der Umgebung des Mobiltelefons zumindest teilweise zu erfassen.

Als 3D-Scanner wird dabei insbesondere eine Einrichtung bezeichnet, die in der Lage ist, die dreidimensionale Gestalt von zumindest Bereichen der Umgebung zu erfassen, woraus die dreidimensionale Umgebungsinformationen erzeugt werden kann. Dies kann insbesondere durch ein zeilen- und/oder rasterartiges Überstreichen von Oberflächen der Umgebung mit gerichteten elektromagnetischen Strahlen, insbesondere Lichtstrahl durchgeführt werden. Die Strahlen werden von einer Sendeeinheit des 3D-Scanners ausgesendet. Die Oberflächen in der Umgebung des Scanners reflektieren die auf sie gerichteten Strahlen; reflektierte Komponenten der Strahlen werden von einer Empfangseinheit des 3D-Scanners erfasst und ausgewertet. Die Zeit zwischen dem Aussenden des Strahls und dem Empfang der zugehörigen Reflexion ist ein Maß für die Entfernung zwischen der Sendeeinheit und dem Objekt, an welchem die Reflexion des Strahl stattgefundet hat. Als Strahl wird insbesondere ein Lichtstrahl, insbesondere Laserstrahl, verwendet. Der verwendete Frequenzbereich des Lichtstrahls liegt insbesondere im Infrarotbereich, so dass dieser nicht sichtbar ist. Entsprechende Sensoren werden bereits in der Microsoft Hololens verbaut (Kinect Sensor). Sende- und Empfangseinheit sind insbesondere, aber nicht notwendigerweise, in einer Baugruppe zusammengefasst.

Insbesondere ist der 3D-Scanner ausgebildet, dreidimensionale Umgebungsinformationen von **uncodierten** Oberflächen zu erfassen. Codierte Oberflächen sind insbesondere Barcodes, QR-Codes (auch dreidimensionale Varianten hiervon), deren Informationsgehalt allerdings auf einer vorherigen informationstechnischen Aufbereitung beruht. Unter uncodierte Oberflächen hingegen werden natürliche Oberflächen (von Pflanzen, Felsen, Böden, Lebewesen) oder gegenständliche Oberflächen (Gebäude, mobile Einrichtungsgegenstände, Fahrzeuge, ...) verstanden, deren Oberfläche nicht informationstechnisch aufbereitet ist.

Das Mobiltelefon ist insbesondere eingerichtet, eine Auswerteeinheit zu veranlassen, aus der erfassten dreidimensionalen Gestalt der Umgebung des 3D-Scanners dreidimensionale Umgebungsinformationen der Umgebung des Mobiltelefons zu erzeugen.

Der 3D-Scanner umfasst insbesondere
- eine Sendeeinheit zum Aussenden von elektromagnetischen Strahlen, insbesondere Lichtstrahlen, und
- eine Empfangseinheit zum Empfang von Reflexionen der von der Sendeeinheit ausgesendeten elektromagnetischen Strahlen umfasst.

Der 3D-Scanner ist bevorzugt derart am Mobiltelefon angeordnet, um einen Bereich oberhalb des Mobiltelefons zu erfassen; alternativ ist der 3D-Scanner derart am Mobiltelefon angeordnet ist, um einen Bereich hinter dem Mobiltelefon zu erfassen.

Eine bevorzugte Position des 3D-Scanners ist an einer oberen Kante des Mobiltelefons.

Die erfindungsgemäße Anordnung umfasst ein Mobiltelefon der vorgenannten Art sowie eine Auswerteeinheit, wobei die Auswerteeinheit eingerichtet ist, aus der erfassten dreidimensionalen Gestalt der Umgebung des 3D-Scanners dreidimensionale Umgebungsinformationen der Umgebung des Mobiltelefons zu erzeugen. Die Auswerteeinheit kann
- integral mit dem 3D-Sensor ausgebildet sein, oder
- separat zum 3D-Sensor ausgebildet sein und Bestandteil des Mobiltelefons sein, oder
- separat zum 3D-Sensor ausgebildet sein und kein Bestandteil des Mobiltelefons sein. Insbesondere im letzteren Fall kann die Auswertung über ein Gerät außerhalb des Mobiltelefons erfolgen.

Das erfindungsgemäße Verfahren zum Abrufen von Hintergrundinformationen zum Umfeld des Mobiltelefons oder einer Anordnung der vorgenannten Art umfasst die folgenden Verfahrensschritte:
**Erfassen** zumindest teilweise der dreidimensionalen Gestalt der Umgebung mittels des 3D-Scanners;
**Erzeugen** von Umgebungsinformationen aus der erfassten dreidimensionalen Gestalt der Umgebung;
**Abgleichen** der erzeugten Umgebungsinformationen mit hinterlegten Umgebungsinformationen, die in einer Datenbank hinterlegt sind, **Ermitteln** von hinterlegten Hintergrundinformation, die den abgeglichenen hinterlegten Umgebungsinformationen in der Datenbank zugeordnet sind;
**Bereitstellen** der hinterlegten Hintergrundinformation.

In einer bevorzugten Ausgestaltung ist den hinterlegten Umgebungsinformationen jeweils eine hinterlegte Positionsangabe als hinterlegte Hintergrundinformation zugeordnet ist. Im Schritt **Bereitstellen** wird diejenige hinterlegte Positionsangabe, welcher der abgeglichen hinterlegten Umgebungsinformation zugeordnet ist, bereitgestellt. Das Verfahren umfasst ferner den Schritt **Zuweisen** der ersten bereitgestellten Positionsangabe als die aktuelle Position des Mobiltelefons.

Auf diese Weise kann sind bekannte (nämlich in Datenbank hinterlegte) Oberflächenprofile mit einer Position verknüpft. Wird ein solches bekanntes Oberflächenprofil erkannt, so kann hieraus die Position ermittelt und dem Mobiltelefon zugewiesen werden.

In einer Ausgestaltung kann die hinterlegte Positionsangabe eine Identifizierungsangabe einer Position innerhalb eines Gebäudes, insbesondere eine Raumidentifizierungsangabe, umfassen. Somit kann auch innerhalb von Gebäuden eine Positionsbestimmungs- und/oder Navigationsdienstleistung bereitgestellt werden. Es lässt sich somit eindeutig feststellen, dass sich das Mobiltelefon in dem Raum mit der entsprechenden Identifizierungsangabe befindet.

In einer Ausgestaltung kann die hinterlegte Positionsangabe eine geodätische Ortsangabe umfassen. Hierdurch kann unmittelbar die globale Positionsbestimmung erfolgen.

In einer Ausgestaltung wird mittels einer ersten Positionsermittlung über ein Proximity-Sensing Verfahren, insbesondere mittels einer Mobilfunk-Basisstation oder einer WLAN-Basistationen, oder anhand eines Trilaterationsverfahren, insbesondere mittels Satellitennavigation, eine erste Positionsermittlung durchgeführt; mithilfe des 3D-Scanners wird eine zweite Positionsermittlung durchgeführt, wobei die zweite Positionsermittlung eine höhere Genauigkeit aufweist als die erste Positionsermittlung.

Hierbei kann über das Proximity-Sensing Verfahren oder das Trilaterationsverfahren Verfahren zwar grundsätzlich der Standort ermittelt werden und damit auch das Hochhaus (z.B. Messeturm Frankfurt), in dem sich das Mobiltelefon befindet; über die zweite zweite Positionsermittlung, die sich in der oben beschriebenen Weise dem 3D-Scanner bedient, kann nun gezielt eine Datenbank des Hochhauses nach entsprechenden Umgebungsinformationen und Identifizierungsangabe (Raumnummer) abgefragt werden.

In einer bevorzugten Ausgestaltung ist den hinterlegten Umgebungsinformationen jeweils eine hinterlegte Gegenstandsinformation als hinterlegte Hintergrundinformation zugeordnet. Im Schritt **Bereitstellen** wird diejenige hinterlegte Gegenstandsinformation, welche der abgeglichen hinterlegten Umgebungsinformation zugeordnet ist, bereitgestellt. Das Verfahren umfasst ferner den Schritt **Zuweisen** dem Umfeld des Mobiltelefons der ersten hinterlegten Gegenstandsinformation. Mit anderen Worten: Es kann so ermittelt werden, dass sich in der Umgebung des Mobiltelefons ein Gegenstand befindet, der den zugewiesenen Gegenstandsinformationen entspricht.

Die vorgenannten Schritte können nun verwendet werden, um auf dem Mobiltelefon individuelle Nutzerinformationen auf einem Mobiltelefon bereitzustellen. Dafür wird ein ein Verfahren der vorgenannten Art ausgeführt, wodurch die insbesondere umfeldbasierten, hinterlegte Hintergrundinformation bereitgestellt werden. Basierend darauf werden dann individuelle Nutzerinfomationen bereitgestellt, die i auf dem Mobiltelefon ausgegeben werden können. Hierbei kann es sich insbesondere um nutzerbezogene Werbung handeln.

Die Erfindung wird anhand der Figuren nachfolgend näher erläutert; hierin zeigt:
Figur 1; ein erfindungsgemäßes Mobiltelefon in a) Frontansicht, b) Seitenansicht, c) Rückansicht;
Figur 2; das Mobiltelefon nach Figur 1 a) in vertikaler Ausrichtung, b) in schräger Ausrichtung, c) in horizontaler Ausrichtung;
Figur 3 schematisch die Funktionsweise eines 3D-Scanners des Mobiltelefons nach
Figur 4 die Funktionsweise der Anordnung mit einem Mobiltelefon nach Figur 1 in Zusammenspiel mit einer Datenbank;

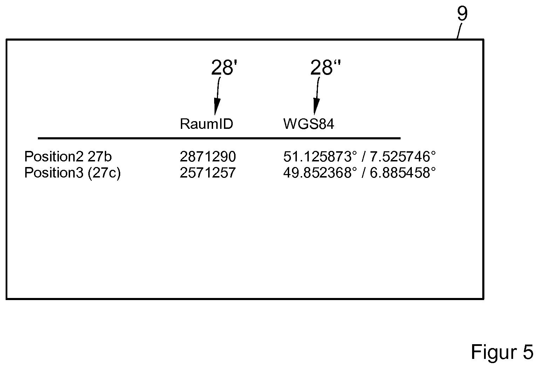

Figur 5 weitere Details der Datenbank aus Figur 4.

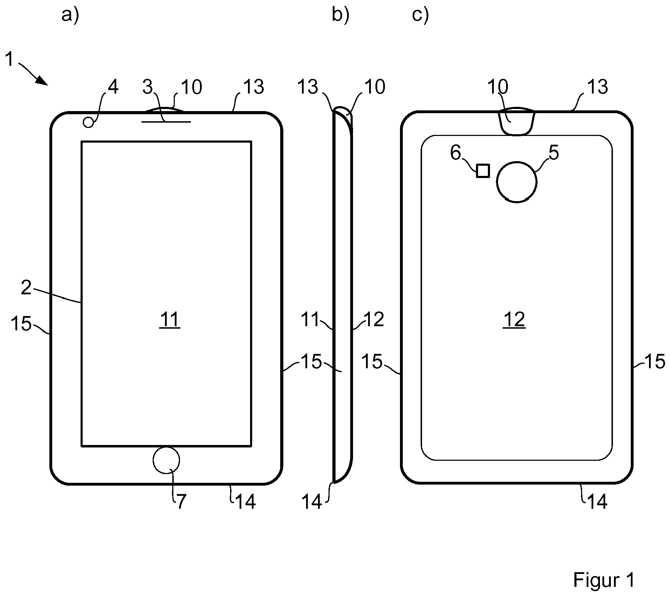

Figur 1 zeigt ein erfindungsgemäßes Mobiltelefon 1, welches internetfähig ist. Wie herkömmliche Mobiltelefone 1 umfasst dies eine Vorderseite 11 mit einem Bildschirm 12, hier einem berührungsempfindlichen Bildschirm 2, einer Bedientaste 7, einem Lautsprecher 3 und einer ersten Kamera 4. Auf einer Rückseite 12 ist eine zweite Kamera 5 sowie eine LED 6, die ein Blitzlicht für die zweite Kamera 5 erzeugen kann. Die Form des Mobiltelefons 1 definiert eine Oberkante 13, eine Unterkante 14 sowie diese verbindende und an den Seiten angeordnete Seitenkanten 15.

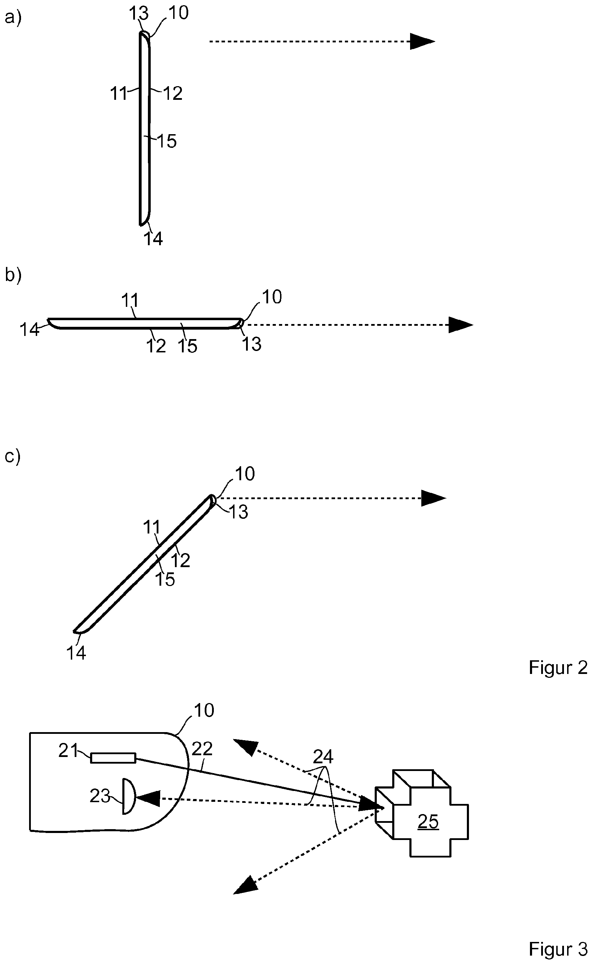

Erfindungsgemäß umfasst das Mobiltelefon einen 3D-Scanner, welcher in der Lage ist, dreidimensionale Umgebungsinformationen aus der Umgebung des Mobiltelefons 1 zu erfassen. Dies wird nachfolgend anhand der Figur 3 erläutert.

Im Umfeld des Mobiltelefons 1 befindet sich ein hier schematisch dargestelltes Objekt 25. Der 3D-Scanner 10 umfasst eine Sendeeinheit 21, welche elektromagnetische Strahlen 22 aussenden kann. Diese Strahlen 22 reflektieren an dem Objekt 25; Reflexionen 23 treffen auf eine Empfangseinheit 23 des 3D-Scanners 10. Dabei ist entweder die Richtung (relativ zum 3D-Scanner) der ausgesendeten Strahlen 22 oder die Richtung (relativ zum 3D-Scanner) der auftreffenden Strahlen bekannt oder wird errechnet, woraus die Richtung des Reflexionspunktes relativ zum 3D-Scanner 10 ermittelbar ist. Aus der Laufzeit zwischen Absenden der Strahlen und er Empfang der Reflexion kann auf den Abstand der reflektierenden Oberfläche geschlossen werden. Änderungen der Ausrichtung des 3D-Scanners 10 während eines Scanvorgangs können mithilfe von Lagesensoren (z.B. Beschleunigungssensor; Gyroskop) am Mobiltelefon 1 berücksichtigt werden.

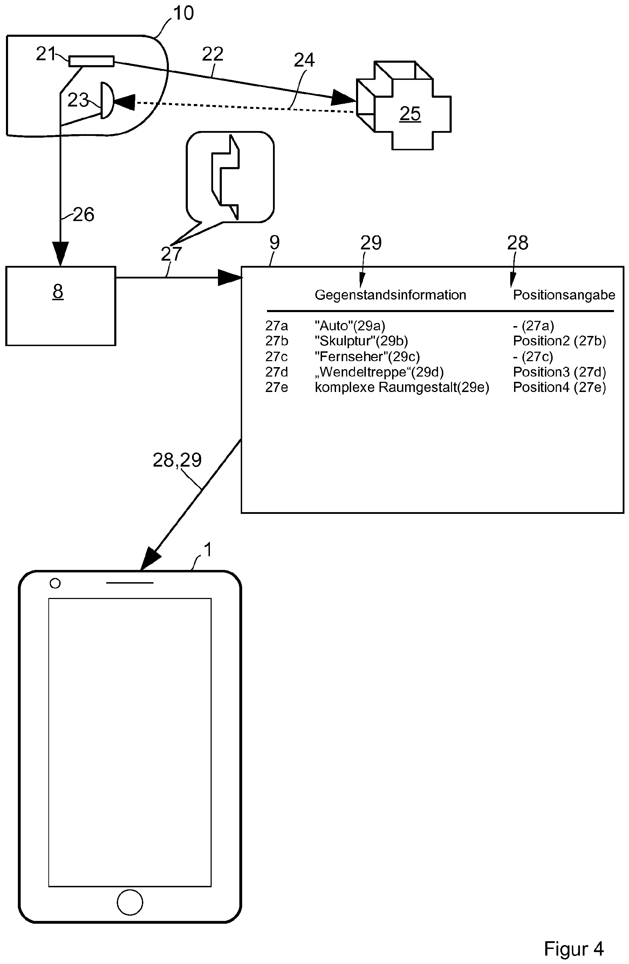

Durch die Empfangseinheit 23 und die Sendeeinheit 21 werden zunächst Rohdaten 26 erzeugt (Figur 4), die von einer Auswerteeineinheit 9 ausgewertet werden. Ergebnis dieser Auswertung ist eine dreidimensionale Umgebungsinformation 27. Dies ist insbesondere ein Oberflächenprofil von zumindest Teilen des Objekts 25. Die Auswerteeinheit 9 kann Bestandteil des Mobiltelefons sein, insbesondere auch Bestandteil des 3D-Sensors; es ist allerdings auch möglich, die Auswertung auf ein separates Gerät auszulagern. In diesem Fall stellt das Mobiltelefon 1 lediglich die Rohdaten 26 bereit.

Die so erzeugten Umgebungsinformation werden mithilfe einer Datenbank 9 weiterverwendet (Figur 4). In dieser Datenbank 9 sind eine Vielzahl von Umgebungsinformation 27a-27e hinterlegt. Es wird nun geprüft, ob eine dieser hinterlegten Umgebungsinformationen 27a-27e der erzeugten Umgebungsinformation 27 entspricht, d.h. z.B. teilweise identisch oder ähnlich ist.

Zu den hinterlegten Umgebungsinformationen 27a-27e sind Hintergrundinformationen 28, 29 in der Datenbank 9 hinterlegt. Dies sind insbesondere Positionsangaben 28 und/oder Gegenstandsinformationen 29.

Die Positionsangaben 28 umfassen insbesondere geodätische Positionsangaben (z.B. GPS Koordinaten), aus der sich die geographische Position unmittelbar ergibt; zusätzlich ist eine Identifizierungsangabe vorhanden, die keinen unmittelbaren Rückschluss auf die geografische Position zulässt; dies Angabe kann beispielsweise eine eindeutige RaumID sein, welches individuell ein Zimmer oder Bereich innerhalb eines bestimmten Hochhauses bezeichnet.

Wenn nun der Datenbankabgleich ergibt, dass eine der hinterlegten Umgebungsinformationen 27a-27e der erzeugten Umgebungsinformationen 27 entspricht, so kann diese hinterlegte Positionsangabe 27a dem Mobiltelefon selbst zugewiesen werden. Somit kann ermittelt werden, dass sich das Mobiltelefon 1 an der hinterlegten "geodätischen" Position befindet oder in einem Raum mit der entsprechenden RoomID befindet. Hierbei kann es sich z.B. um den Ausstellungsraum eines Automobilherstellers der Marke x handeln.

Damit ein Raum eindeutig mithilfe des Scanners 10 erkannt werden bedarf es einer eindeutigen Oberflächencharakteristik; dies kann beispielsweise durch eine individuelle Innenarchitektur mit einer komplexen Raumgestalt 27e sein oder eine individuelle Skulptur 27b innerhalb des Raumes erzeugt werden.

Die hinterlegten Gegenstandsinformationen 29 können zudem Informationen zu einem Gegenstand, der eine Oberfläche aufweist, die den erzeugten Umgebungsinformationen 27 entspricht. Hierzu scannt der 3D-Scanner 10 im nun einen Oberflächenabschnitt eines Automobils als Objekt 25. Die erzeugten Umgebungsinformationen 27 repräsentieren ein Oberflächenprofil der Motorhaube. In der Datenbank 9 ist in weitgehend identisches Oberflächenprofil als Umgebungsinformation 27a hinterlegt. Zu diesem Eintrag in der Datenbank 9 ist die Gegenstandsinformation "Motorhaube eines Kfz", oder weiter verfeinert "Motorhaube eines Kfz, Marke x, Typ y" hinterlegt; Als Ergebnis kann nun die Gegenstandsinformation "Motorhaube eines Kfz" oder "Kfz, Marke x, Typ y" ausgegeben werden.

Die Erkenntnis ist nun, dass der Nutzer des Mobiltelefons im Ausstellungsraum der Fahrzeugmarke x ein Fahrzeug vom Typ y betrachtet hat und sich wahrscheinlich dafür interessiert. Für diese Erkenntnis sind keinerlei Internet-Surfchroniken erforderlich. In der Folge kann nun dem Nutzer über das Mobiltelefon 1 Nutzerinfomationen (Werbung) über diesen Fahrzeugtyp y dargeboten werden.

Der 3D-Scanner ist bevorzugt an der Oberkante 13 des Mobiltelefons angeordnet. So kann der 3D-Scanner optimal die Bereich vor dem Nutzer erfassen, unabhängig davon, ob der Nutzer das Mobiltelefon vertikal (Figur 2a), schräg (Figur 2b) oder horizontal (Figur 2c) hält.

### Bezugszeichenliste

- 1: Mobiltelefon
- 2: Bildschirm
- 3: Lautsprecher (Vorderseite)
- 4: erste Kamera (Vorderseite)
- 5: zweite Kamera (Rückseite)
- 6: LED
- 7: Bedientaste
- 8: Auswerteeinheit
- 9: Datenbank
- 10: 3D-Scanner
- 11: Vorderseite
- 12: Rückseite
- 13: obere Kante
- 14: untere Kante
- 15: Seitenkante
- 21: Sendeeinheit
- 22: ausgesendeter Strahl
- 23: Empfangseinheit
- 24: Reflexion
- 25: Objekt
- 26: Rohdaten
- 27: dreidimensionale Umgebungsinformation (dreidimensionales Oberflächenprofil)
- 28: Positionsangabe
- 29: Gegenstandsinformation

## Patentansprüche

**1.** Mobiltelefon (1), umfassend
einen 3D-Scanner (10), der eingerichtet ist, die dreidimensionale uncodierte Gestalt (25) der Umgebung des Mobiltelefons zumindest teilweise zu erfassen.

**2.** Mobiltelefon (1) nach dem vorherigen Anspruch,
**dadurch gekennzeichnet,**
**dass** das Mobiltelefon (1) eingerichtet ist, eine Auswerteeinheit (8) zu veranlassen, aus der erfassten dreidimensionalen Gestalt (25) der Umgebung des 3D-Scanners (10) dreidimensionale Umgebungsinformationen (27) der Umgebung des Mobiltelefons (1) zu erzeugen.

**3.** Mobiltelefon nach dem vorherigen Anspruch,
**dadurch gekennzeichnet,**
**dass** der 3D-Scanner (10),
- eine Sendeeinheit (21) zum Aussenden von elektromagnetischen Strahlen (21), insbesondere Lichtstrahlen, und
- eine Empfangseinheit (23) zum Empfang von Reflexionen (24) der von der Sendeeinheit (21) ausgesendeten elektromagnetischen Strahlen (22) umfasst.

**4.** Mobiltelefon nach einem der vorherigen Ansprüche,
**dadurch gekennzeichnet,**
**dass** der 3D-Scanner (10) derart am Mobiltelefon (1) angeordnet ist, um einen Bereich oberhalb des Mobiltelefons (1) zu erfassen und/oder
**dass** der 3D-Scanner derart am Mobiltelefon (1) angeordnet ist, um einen Bereich hinter dem Mobiltelefon (1) zu erfassen,
insbesondere dass der 3D-Scanner an einer oberen Kante (13) des Mobiltelefons 81) angeordnet ist.

**5.** Anordnung umfassend ein Mobiltelefon (10) nach einem der vorherigen Ansprüche und eine Auswerteeinheit (8), wobei die Auswerteeinheit (8) eingerichtet ist, aus der erfassten dreidimensionalen Gestalt (25) der Umgebung des 3D-Scanners (10) dreidimensionale Umgebungsinformationen (27) der Umgebung des Mobiltelefons (1)

6. Anordnung nach dem vorherigen Anspruch,
**dadurch gekennzeichnet,**
**dass** die Auswerteeinheit (8),
- integral mit dem 3D-Sensor (10) ausgebildet ist,
oder
- separat zum 3D-Sensor (10) ausgebildet ist und Bestandteil des Mobiltelefons (1) ist,
oder
- separat zum 3D-Sensor (10) ausgebildet ist und kein Bestandteil des Mobiltelefons (1) ist.

**7.** Verfahren zum Abrufen von Hintergrundinformationen (28, 29) zum Umfeld des Mobiltelefons (1) nach einem der Ansprüche 1 bis 5 oder einer einer Anordnung nach einem der Ansprüche 5 bis 6, das Verfahren umfasst die folgenden Verfahrensschritte:
**Erfassen** zumindest teilweise der dreidimensionalen Gestalt (25) der Umgebung mittels des 3D-Scanners (10);
**Erzeugen** von Umgebungsinformationen (27) aus der erfassten dreidimensionalen Gestalt der Umgebung;
**Abgleichen** der erzeugten Umgebungsinformationen (27) mit hinterlegten Umgebungsinformationen (27a-27e), die in einer Datenbank (9) hinterlegt sind,
**Ermitteln** von hinterlegten Hintergrundinformation (28a-28e; 29a-29e), die den abgeglichenen hinterlegten Umgebungsinformationen (27a-27e) in der Datenbank zugeordnet sind;
**Bereitstellen** der hinterlegten Hintergrundinformation (28a-28e; 29a-29e).

**8.** Verfahren nach dem vorherigen Anspruch,
**dadurch gekennzeichnet,**
**dass** den hinterlegten Umgebungsinformationen (27a-27e) jeweils eine hinterlegte Positionsangabe (28a-28e) als hinterlegte Hintergrundinformation zugeordnet ist, wobei im Schritt **Bereitstellen** diejenigen hinterlegte Positionsangabe (28a-28e), welche der abgeglichen hinterlegten Umgebungsinformation (27a-27e) zugeordnet ist, bereitgestellt wird, und
das Verfahren umfasst ferner den Schritt
**Zuweisen** der ersten bereitgestellten Positionsangabe (28a-28e) als die aktuelle

9. Verfahren nach dem vorherigen Anspruch,
**dadurch gekennzeichnet,**
**dass** die hinterlegte Positionsangabe (28a-28e) eine Identifizierungsangabe (28') einer Position innerhalb eines Gebäudes, insbesondere eine Raumidentifizierungsangabe, umfasst.

**10.** Verfahren nach dem vorherigen Anspruch,
**dadurch gekennzeichnet,**
**dass** die hinterlegte Positionsangabe (28a-28e) eine geodätische Ortsangabe (28") umfasst.

**11.** Verfahren nach einem der vorherigen Ansprüche,
**dadurch gekennzeichnet,**
**dass** in einem ersten Schritt über ein Proximity-Sensing Verfahren, insbesondere mittels einer Mobilfunk-Basisstation oder einer WLAN-Basistationen, oder anhand eines Trilaterationsverfahren, insbesondere mittels Satellitennavigation, eine erste Positionsermittlung durchgeführt wird, und
**dass** mithilfe des 3D-Scanners (10) eine zweite Positionsermittlung durchgeführt wird, wobei die zweite Positionsermittlung eine höhere Genauigkeit aufweist als die erste Positionsermittlung.

**12.** Verfahren nach einem der vorherigen Ansprüche,
**dadurch gekennzeichnet,**
**dass** den hinterlegten Umgebungsinformationen (26a-26e) jeweils eine hinterlegte Gegenstandsinformation (29a-29e) als hinterlegte Hintergrundinformation zugeordnet ist,
wobei im Schritt **Bereitstellen** diejenigen hinterlegte Gegenstandsinformation (29a-29e), welche der abgeglichen hinterlegten Umgebungsinformation (27a-27e) zugeordnet ist, bereitgestellt wird, und
das Verfahren umfasst ferner den Schritt
**Zuweisen** dem Umfeld des Mobiltelefons (1) der ersten hinterlegten Gegenstandsinformation (29a-29e).

13. Verfahren zum Bereitstellen von individuellen Benutzerinformationen auf einem Mobiltelefon (1),
wobei durch ein Verfahren nach einem der Ansprüche 7 bis 12, insbesondere umfeldbasierte, hinterlegte Hintergrundinformation (28, 29) bereitgestellt werden, wobei basierend auf den bereitgestellten Hintergrundinformationen (28, 29) individuelle Nutzerinfomationen bereitgestellt werden.
